Europäisches Patentamt

European Patent Office

Office européen des brevets

(11) Publication number: **0 299 253**
**A1**

## EUROPEAN PATENT APPLICATION

(21) Application number: 88110031.7

(22) Date of filing: 23.06.88

(51) Int. Cl.4: **F41H 5/02** , **C04B 35/71**

(30) Priority: 13.07.87 US 72501

(43) Date of publication of application:
18.01.89 Bulletin 89/03

(84) Designated Contracting States:
BE CH DE FR GB IT LI LU NL SE

(71) Applicant: CEMCOM CORPORATION
10123 Senate Drive
Lanham Maryland 20706(US)

(72) Inventor: Double, David D.
Welcheston House Hurstbourne Tarrant
NR, Andover Hampshire(GB)
Inventor: Bright, Randall P.
14913 London Lane
Bowie Maryland 20715(US)

(74) Representative: Jung, Elisabeth, Dr. et al
Dr. Elisabeth Jung Dr. Jürgen Schirdewahn
Dipl.-Ing. Claus Gernhardt Patentanwälte
Clemensstrasse 30 Postfach 40 14 68
D-8000 München 40(DE)

(54) Chemically bonded ceramic armor materials.

(57) Novel armor materials are disclosed which comprise a chemically bonded ceramic material and explosive material that is embedded in or associated with the chemically bonded ceramic material.

The chemically bonded ceramic materials can comprise inorganic materials such as cements, mortars and concretes; gypsum and plaster.

Preferred chemically bonded ceramic materials comprise high strength chemically bonded ceramics which are produced by processing techniques designed to produce a compact microstructure of very low porosity, and by use of admixtures which contribute to strength during the hydraulic bonding process.

The chemically bonded ceramics. useful in the invention can comprise an additional constituent such as:

(a) fibers that increase the fracture toughness and multi-hit capability of the armor materials, and/or

(b) hard aggregates which blunt, deflect and/or erode penetrators that strike the armor.

The armor materials of the invention also include a chemically bonded ceramic material and explosive charges that are embedded in or associated with the ceramic material in multi-component systems. The multi-component systems comprise elements or segments of various shapes, sizes and materials.

Armor materials are disclosed that have improved resistance to impact penetration as a result of higher strength, greater hardness, additional fracture toughness, better impact resistance and greater stiffness. The armor materials have lower weight, lower density, lower combustibility, greater ease of installation and repair and lower material cost, and are easily formed at ambient conditions.

*FIG. 1*

## CHEMICALLY BONDED CERAMIC ARMOR MATERIALS

### Background of the Invention

### Field of Invention

This invention is in the field of improved armor materials for military purposes.

It is increasingly difficult to defend against the destructive forces of projectiles being developed for the penetration and destruction of current armor materials. These projectiles are referred to as ballistic threats or simply "threats". Modern threats cover a wide range of characteristics. They vary in size and type and have impact velocities from a few hundred meters per second to several thousand meters per second. Types include ball projectiles, fragment simulating projectiles (FSP), armor piercing (AP) projectiles, self-forging fragments (SFF), and fin stabilized long rod kinetic energy (KE) projectiles and chemical energy (CE) shaped charge jets.

Shaped charge jets use a shaped charge of high explosive to focus and inject a narrow jet of metal at extremely high velocity at the target. While the penetration effectiveness of KE projectiles depends mainly on the mass, hardness, geometry and velocity of the projectile, the shaped charged jet relies on the extremely high temperature and pressure of the metal jet to penetrate the target by hydrodynamic flow and erosion. With such projectiles, damage is done not only by the missile itself but is enhanced by material ejected from the backside of the target by rear face spalling and fragmentation of the armor material.

To meet these threats, exceptional mechanical and physical properties are required in armor materials. Current armors include toughened metal alloys, fiber reinforced plastics and high technology ceramic materials. Engineering design of armor systems has been an important factor. Many modern armors have multiple components, using several plates of different materials bonded together in order to exploit the individual material properties to best advantage. Other more complex armors have been developed. Spaced armors and oblique louvered armors for example, are effective against high velocity projectiles because they deflect and destabilize the path of incoming projectiles.

The armor materials described so far are "passive" armors. "Reactive" armors, as known in the art, contain a layer of high explosive material sandwiched between two metal plates. When struck by a projectile, the explosive material detonates and causes the armor plate to move and react against the projectile.

### Prior Art

The above described reactive armor involving a sandwich structure is the subject of British Patent 1,581,125. The patent describes a structure having a layer of an explosive substance covered on at least one side and preferably both sides by a layer of non-combustable material, such as metal.

The British Patent describes as prior art, a complex device involving a base plate and cavities containing explosive charges formed by two intersecting groups of ribs and strong and thick plates forming the boundaries on the side facing away from the baseplate. On flat surfaces facing the explosive charges are attached ignition pins which move when a projectile makes impact, causing an associated charge to detonate. As a result of this detonation, the opposing plate moves away from the baseplate.

A sandwich structure such as disclosed in the British Patent 1,581,125 is described in detail in a paper entitled "Interaction of Shaped-Charge Jets with Reactive Armor" by M. Mayseless and co-workers presented in the Eighth International Symposium on Ballistics at Orlando, Florida, October 23 - 25, 1984. An explosive charge is sandwiched between two metal plates. When a shaped charge jet impinges obliquely on the reactive element, the jet initiates the explosive and the resulting lateral interaction between the jet and the accelerated plate causes a severe perturbation to the jet, thus reducing the subsequent penetration of the jet into the armor.

A report published by the Engineering & Services Laboratory, Air Force Engineering & Services Center, Tyndall Air Force Base, Florida in March, 1986, discloses that armor materials made of a composition of calcium aluminate cement, hydrolyzed polyvinyl acetate polymers and water exhibited "catastrophic brittle failures". Nylon-mesh reinforced armors were said to perform considerably better, but were still not impressive. The report discloses composite armor plates with a ceramic facing and several layers of the reinforced plates laminated together, but states that these composite armor plates had not yet been tried.

Copending application Serial No. 037,673, filed April 13, 1987, discloses that armor materials can be made from high strength chemically bonded ceramics and high strength, high modulus fibers that increase the fracture toughness and multi-hit capability of the armor materials, and/or hard aggregates that blunt, deflect and/or erode penetrators that strike the armor.

An object of the present invention is to provide armor materials that are more resistant to modern threats than are the currently available armor materials.

Another object of the invention is to provide armor materials with improved resistance to impact penetration as a result of higher strength, greater hardness, additional fracture toughness, better impact resistance and greater stiffness.

A further object of the invention is to provide armor materials with lower weight, lower density, lower combustibility, and that are easily formed at ambient conditions, and that have greater ease of installation and repair and lower material costs.

Another object of the invention is to improve the capabilities of armor made of chemically bonded ceramics.

An object of the invention is to use chemically bonded ceramics in reactive armors.

Another object of the invention is to provide a new reactive armor.

## Summary of the Invention

The novel armor materials of the invention comprise a chemically bonded ceramic material and an explosive material that is embedded in or associated with the chemically bonded ceramic material.

The chemically bonded ceramic materials can comprise inorganic materials such as cements, mortars and concretes, gypsum and plaster. These materials can be referred to as chemically bonded ceramics.

Preferred chemically bonded ceramic materials for use in the invention comprise high strength chemically bonded ceramics which are inorganic oxide materials; for example metal oxide silicates, aluminates and phosphates, that are blended and processed by special techniques that provide high strength and toughness.

The chemically bonded ceramics useful in the invention can comprise an additional constituent such as:

(a) fibers that increase the fracture toughness and multi-hit capability of the armor materials, and/or

(b) hard aggregates which blunt, deflect and/or erode projectiles that strike the armor.

The armor materials of the invention also include a chemically bonded ceramic material and an explosive material that is embedded in or associated with the chemically bonded ceramic material in multi-component systems. The multi-component systems comprise elements or segments of various shapes, sizes and materials.

Because of the very nature of the explosive materials used in reactive armors, the chemically bonded ceramic material must be capable of being formed under conditions that are safe for handling the explosive material. Furthermore, the explosive materials can be treated to withstand the conditions required for forming the chemically bonded ceramic material around the explosive particles.

## Brief Description of the Drawings

Figure 1 shows a cross-sectional view of an armor material comprising a high strength chemically bonded ceramic material containing particles of explosive material dispersed or embedded in the matrix material.

Figure 2 shows a cross-sectional view of an armor material having steel or conventional ceramic plates or tiles that are backed up with a layer of explosive material, and supported by a high strength chemically bonded ceramic material.

Figure 3 depicts a cross-sectional view of an armor material in steel or conventional ceramic plates or tiles are embedded in a high strength chemically bonded ceramic. Each steel or ceramic plate has an explosive charge positioned behind the plate, that is, on the side away from the projectile.

Description of the Preferred Embodiments

## (1) Chemically Bonded Ceramics

Chemically bonded ceramics are inorganic oxide materials, for example, metal oxide silicates, aluminates and phosphates. High strength chemically bonded ceramics are such inorganic oxide materials that are blended and processed by special techniques designed to produce high strength and toughness.

Mostly based on conventional hydraulic cement systems, such as Portland cement and alumina cement, chemically bonded ceramics have mechanical properties which are achieved by processing techniques designed to produce a compact microstructure of very low porosity, and by use of admixtures which contribute to strength during the hydraulic bonding process. These admixtures may include reactive filler powders, such as pozzolanic silica, as well as small amounts of organic and inorganic polymers. The polymers function not only as plasticizers and binders during processing, but also can enhance strength and toughness by chemical cross-linking with the cement.

The present invention utilizes high strength chemically bonded ceramics which in the final cured armor material exhibit a flexural strength of at least about 20 MPa, but which on the average can be as high as 35 to 70 MPa and higher; and a compressive strength of at least about 100 MPa, but which on the average can be 200 to 300 MPa and higher.

A wide variety of cementitious materials can be used to prepare the high strength chemically bonded ceramics used in the armor materials of the present invention. The most important type of cementitious material includes cements such as the following:

    1. hydraulic cementitious materials such as:
        (a) high alumina cements, and
        (b) silica based cements, e.g., Portland cements,
    2. polymer treated cements, such as
        (a) polymer modified cements, and
        (b) polymer impregnated cements; and
    3. other cementitious materials such as:
        (a) phosphate based cements, and
        (b) cement forming ceramic compounds, e.g.; metal oxides combined with silicates, aluminates, phosphates, sulfates, carbonates, and combinations thereof.

Examples of high strength chemically bonded ceramic matrix materials include those described in the following United States Patents Nos. 4,353,748; 4,410,366; 4,482,385; 4,501,830 and 4,505,753, the disclosures of which are incorporated herein by reference.

In addition, the high strength chemically bonded ceramic material can include the additives disclosed in the five above-noted U.S. patents. For example, as described in U.S. Patent No. 4,505,753, the cement is preferably Class H Portland cement, mixed with a crystalline form of silicon dioxide of a general size of finer than 5 microns, silica fume and a superplasticizer. U.S. Patent No. 4,482,385 describes a matrix comprising Class H Portland cement, Min-U-Sil silica particles, silica fume and a superplasticizer. A stainless steel additive is also employed. As described in U.S. Patent No. 4,410,366, the cement is a high alumina cement and a water dispersable or water soluble polymer or copolymer. Preferred proportions of components are disclosed in these patents.

The chemically bonded ceramic materials useful in this invention also include the phosphate bonded materials which may comprise the following compounds. Not all the compounds are employed in any given phosphate bonded material, but when any compound is used, it may be used in the indicated proportion.

4

|  | Weight Percent |
|---|---|
| Calcium Aluminates | 5 - 95 |
| Calcium Silicates | 5 - 95 |
| Calcium Alumino-Silicate | 5 - 95 |
| Calcium Sulfate | 5 - 95 |
| Alumina, or Alumino-Silicate | 5 - 95 |
| Calcium and/or Magnesium Oxide | 5 - 95 |
| Alkali Polyphosphate Solution | 2 - 50 |
| Alkali Polysilicate Solution | 2 - 50 |
| Phosphoric Acid Solution | 2 - 50 |
| Buffered Phosphate Solution | 2 - 50 |

Suitable chemically bonded ceramic materials are also disclosed in copending applications Serial No. 894,815, filed August 8, 1986; and Serial No. 945,632, filed December 23, 1986.

Gypsums and plasters are also suitable chemically bonded ceramic materials.

### (2) Explosive Materials

Examples of explosive materials are listed in Table 1, with their detonation properties and their physical and chemical characteristics. The data are summarized from the "LLNL Explosives Handbook; Properties of Chemical Explosives and Explosive Simulants," by B. M. Dobratz, Lawrence Livermore, National Laboratory Publication, (March 1981), and from the "LASL Explosive Property Data," edited by T. R. Gibbs and A. Popolato, University of California Press, (1980). The Table provides typical values for comparison purposes, but some allowance should be made for variations in composition and test procedure.

Following are definitions of certain of the properties listed in Table 1:

Heat of Detonation ($\Delta H$ det): Calculated maximum enthalpy change on detonation of explosive to most stable products. Initial and final states at 25°C and 1 atmosphere pressure.

Critical Temperature ($T_c$): Lowest temperature at which the explosive will self-heat to explosion.

Detonation Velocity (D): Velocity of the detonation front along a standard cylindrical rate stick (large charges).

Detonation Pressure ($P_{CJ}$): Chapman-Jouget pressure. Detonation pressure computed from the initial free surface velocity of an explosively drive plate.

Shock Initiation Sensitivity ($H_{50}$): Determined from the drop-weight test using a 2.5 Kg weight on a Type 12 anvil. $H_{50}$ is the drop height that gives 50% probability of explosion.

TABLE 1

| Pure Explosives | Density gm/cm$^3$ | Melting Temperature Tm °C | Critical Temperature Tc °C | Heat of Detonation ΔH det MJ/kg | Detonation Velocity D Km/s | Detonation Pressure P GPa | Shock Initiation H$_{50}$ m | Water Solubility g/100g |
|---|---|---|---|---|---|---|---|---|
| BTF[1] | 1.90 | 199 | 250 | 7.07 | 8.5 | 36.0 | - | <0.1 |
| DATB[2] | 1.84 | 286 | 320 | 5.27 | 7.5 | 25.9 | >3.20 | <0.1 |
| HMX[3] | 1.91 | 285 | 258 | 6.78 | 9.1 | 39.0 | 0.26 | <0.1 |
| HNS[4] | 1.74 | 315 | 320 | 5.94 | 7.0 | ~20.0 | 0.54 | <0.1 |
| NC[5] (12%N) | 1.65 | 135 dec | - | 4.85 | - | ~20.0 | 0.50 | <0.1 |
| NQ[6] | 1.81 | 257 | 200 | 4.44 | 7.9 | - | >3.20 | 0.36 |
| PETN[7] | 1.78 | 140 | 197 | 6.90 | 8.3 | 33.5 | 0.14 | <0.1 |
| RDX[8] | 1.81 | 205 dec | 214 | 6.78 | 8.7 | 33.8 | 0.28 | 0.005 |
| TATB[9] | 1.94 | 325 dec | 353 | 5.02 | 7.8 | ~29.0 | >3.20 | 0.1 |
| TETRYL[10] | 1.73 | 130 | - | 6.32 | 7.9 | ~26.0 | 0.37 | 0.007 |
| TNT[11] | 1.65(a) 1.57(b) 1.63(c) | 81 | 286 | 5.90 | 6.7(d) 6.9(e) | 17.0 | 1.48 | 0.013 |

1 - Benzotrifuroxan
2 - Diaminotrinitrobenzene
3 - Cyclotetramethylenetetranitramine
4 - Hexanitrostilbene
5 - Nitrated Cellulose
6 - Nitroguanadine
7 - Pentaerythritoltetranitrate
8 - Cyclotrimethylenetrinitramine
9 - Triaminotrinitrobenzene
10 - Trinitrophenylmethylnitramine
11 - Trinitrotoluene
(a) Theoretical Density, g/cm$^3$
(b) Nominal Density, cast specimen
(c) Nominal Density, pressed specimen
(d) cast specimen
(e) pressed specimen

EP 0 299 253 A1

The heat of detonation ($\Delta H_{det}$), the detonation velocity (D), and the detonation pressure ($P_{CJ}$) give measures of the explosive energy. The critical temperature ($T_c$) and the shock initiation figures ($H_{50}$) indicate the sensitivity of the explosives. All these factors are relevant in selecting the type of explosive material to be used in the armor materials of the invention.

In selecting suitable explosive materials, consideration must be taken of chemical compatibility between the chemically bonded ceramic and the explosive material. It is possible to circumvent a chemical problem by using plastic coated explosive particles.

## (3) Additive Components

## (a) Fiber

The material of the armor material of the invention can contain a fiber component. The fibers provide increased strength and toughness that reduces or eliminates armor fragmentation and provides excellent multi-hit capability.

The fibers may comprise metal fibers, mineral fibers, and organic fibers. The fibers can be randomly dispersed or oriented in the matrix material.

The fibers generally have a length greater than 2 millimeters and have an aspect ratio (length/width) greater than 10. In several embodiments, the fibers are 5 to 15 millimeters in length with an average width or cross-section from 10 to 200 microns. These are average dimensions. The fibers can have a broad distribution of lengths and widths or cross-sections, such that up to about 30 percent of the fibers may be outside the above-mentioned ranges. It is preferred that the fibers have a variable cross-section along the length of the fibers. This irregularity serves to lock or key the fibers into the matrix material. The modulus of the fibers generally exceeds about 7 GPa, and often are higher than 70 GPa.

The fibers can be made of stainless steel, but other metals such as iron, nickel, chromium, tungsten, and molybdenum can be used. Fibers of alloys of the foregoing metals can also be employed. Mixtures of such fibers can be used. The fibers can be razor cut from a metal wire and chopped. The metal fibers can be produced as "steel wool" and chopped to the desired size. Chopped steel wool that is commercially available in short lengths (about 2 to 15 millimeters) can be used. Wires or ribbons of plain carbon steels like SAE 1020 are suitable. Melt extracted fibers are also suitable. Fibers made by this method are manufactured by Ribbon Technology Corporation and are referred to as Ribtec fibers.

Suitable fibers also include mineral fibers such as fibers of glass, mineral wool, carbon, graphite, ceramic, alumina, boron carbide and silicon carbides. Synthetic resin fibers include aramid fibers. such synthetic resin fibers may be used in place of some or all of the metal fiber constituent. Typical synthetic resin fibers include Kevlar 29 and Kevlar 49 aramid polymers. The non-metallic fibers provide an excellent combination of low density, high strength and high modulus. Fibers with high temperature resistance are preferred.

The fiber component is generally employed in a proportion of about 0 to about 60 volume percent based on the volume of the matrix material of the invention, usually about 2 to about 40 volume percent, preferably about 5 to 20 volume percent, and more preferably about 8 to 12 volume percent.

## (b) Aggregate

A constituent of the chemically bonded ceramic material can be an aggregate which serves to blunt, deflect, or erode or otherwise stop the projectiles that strike the armor. The aggregate also enhances the strength and hardness of the armor and increases the compaction of the armor. The aggregate comprises hard pieces that can be regular or irregular in shape. Stainless steel and other steel aggregates or pieces as well as titanium or tungsten aggregates or pieces can be used. In addition, ceramics of great hardness, such as glass, zirconium, alumina, beryllium oxide, silicon carbide and boron carbide can be used. Mixtures of the various aggregates or pieces can be used.

To be effective, the aggregate should be a hard material, generally having a Mohs hardness value of greater than 5.

The chemically bonded ceramic has a high rigidity and bonds the aggregate or pieces together. To deflect or blunt a projectile efficiently, the chemically bonded ceramic should provide effective bonding to the aggregate or pieces, and constraint against movement under impact. To gain maximum results, the aggregate or pieces can be graded in size to achieve optimum packing density. The maximum aggregate or piece size should generally be larger than the cross-sectional size of the impacting projectile. Typical diameters of KE and CE projectiles vary from 0.1 inch to several inches.

Aggregates of ceramic or glass are particularly desirable in armor compositions designed to withstand shaped charge jets. The reason is that the dilatant effect which occurs at impact has a significant effect in deflecting and/or destablizing the jet.

The aggregate or pieces are employed in a proportion of about 0 to about 70 volume percent based on the volume of armor material of the invention, preferably about 25 to about 45 volume percent.

## (4) Armor Materials

The invention involves incorporation of explosive materials into a chemically bonded ceramic material by a method that is suitable for the particular chemically bonded ceramic material. The incorporation can be accomplished either by addition of explosive material during initial mixing or by subsequent intrusion forming around geometrically shaped explosive materials. The method is feasible using chemically bonded ceramics because the mixing and processing temperatures (ambient) never approach the critical detonation temperatures of typical explosive materials (around 200°C to 350°C). Also, when fully hardened, the chemically bonded ceramic provides a non-flammable, strong matrix material of relatively high rigidity.

The armor material of the invention preferably comprises particles, such as pellets or beads of explosive material dispersed in a high strength chemically bonded ceramic material. The chemically bonded ceramic has its own intrinsic armor properties, but on impact by a projectile of sufficient energy, for example, a shaped-charge jet, the explosive material in the immediate path of the projectile is detonated and produces a reactive effect. Progressive detonation shocks, at random angles to the impact path, have sufficient energy to disrupt and destabilize the progress of the projectile, thereby dissipating its energy and impeding its penetration through the armor material.

When the explosive energy, the size and extent of dispersion of the explosive particles are carefully chosen, sympathetic detonation through the whole armor material does not occur. The shock wave attenuation provided by the chemically bonded ceramic prevents the "chain reaction" effect of one exploding pellet detonating adjacent pellets. The explosive energy is thus confined and focused in the volume of material along the path of the projectile. The concentration of explosive particles in the chemically bonded ceramic should be sufficiently high, however, to maximize the statistical chances of interaction between the explosive material and the projectile. Generally, the explosive material can be employed in an amount from about 5 to about 60 percent by volume of the chemically bonded ceramic.

## (5) Multi-Component Systems

Multi-component armors are provided which comprise segments of various sizes, shapes and materials embedded in or associated with an armor material comprising a chemically bonded ceramic and an explosive material.

In one embodiment, metal or conventional ceramic plates or tiles are embedded in a chemically bonded ceramic so that the plates form a facing for the armor material. Each plate has an explosive material positioned behind it, that is, on the side away from the projectile. When an individual plate is struck by a projectile of sufficient energy, detonation of the explosive material results in a reactive forward displacement of the plate to deflect or counteract the projectile. The chemically bonded ceramic provides a rigid support structure for the plates and provides sufficient strength and toughness to sustain the explosive detonation and to catch any spall fragments caused by the impact of the projectile.

A further embodiment uses a chemically bonded ceramic as a potting medium for metal or conventional ceramic plates or tiles. The plates are arranged at an angle to the front surface of the armor and each plate is backed by an explosive charge. When the armor is impacted by a projectile, detonation of the explosive material results in an oblique displacement of the plate to deflect or counteract the projectile.

8

Other configurations of multi component systems can be employed. These include a chemically bonded ceramic armor plate containing tubes containing an explosive material; and a chemically bonded ceramic plate containing glass or ceramic balls as well as explosive particles.

The relative proportion of explosive and chemically bonded ceramic for the multi component systems varies widely depending on the thickness of the armor material, the configuration of the segments employed and the explosive capacity of the explosive material employed.

## (6) Processing Techniques

The type of processing required for making armor materials from chemically bonded ceramic is very similar to that used in forming plastic bonded explosives (PBX). Thus Z-blade kneading, extrusion and pressure forming methods can be used. The explosive sensitivity to high shear mixing and pressure forming should be carefully considered. Relatively insensitive explosives such as DATB, NQ and TATB are safer to use. These terms are identified in Table 1.

## Detailed Description of the Drawings

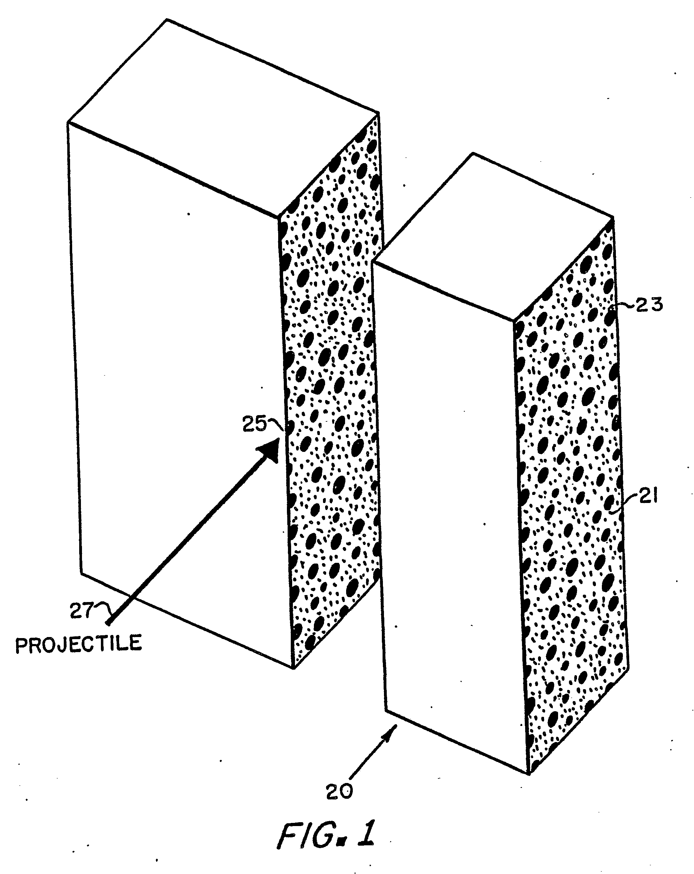

Figure 1 shows a cross-sectional view of an armor material 20. Explosive particles 23 are dispersed in a matrix of chemically bonded ceramic material 21. This type of armor material is particularly effective against chemical energy projectiles (CE). When a projectile 27 impacts the armor material 20, the explosive particles 25 in the immediate path of the projectile 27 are detonated and produce a reactive effect. The resulting progressive detonation shock waves which are at random angles to the impact path, are of sufficient energy to disrupt and destabilize the progress of the projectile, thereby dissipating its energy and impeding its penetration through the armor material 20.

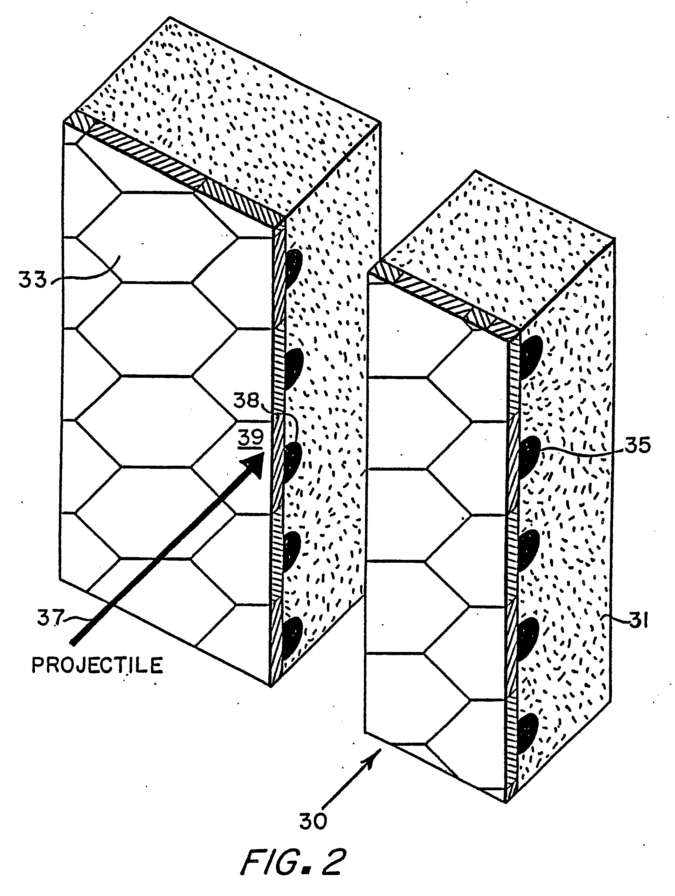

Figure 2 depicts a cross-sectional view of another armor material 30. In this embodiment, steel or alumina ceramic tiles 33 form a front facing and are held in place by a substrate of chemically bonded ceramic 31. Each tile is backed by explosive particles 35. When steel or ceramic tile 39 is struck by a projectile 37 of sufficient energy, the explosive particle 38 detonates and causes a forward displacement of the tile 39 to deflect or counteract the projectile 37. The chemically bonded ceramic material 31 provides a rigid support structure for the steel or ceramic tiles 33 and has sufficient strength and toughness to sustain the explosive detonation and to catch any spall fragments caused by the impact of the projectile 37.

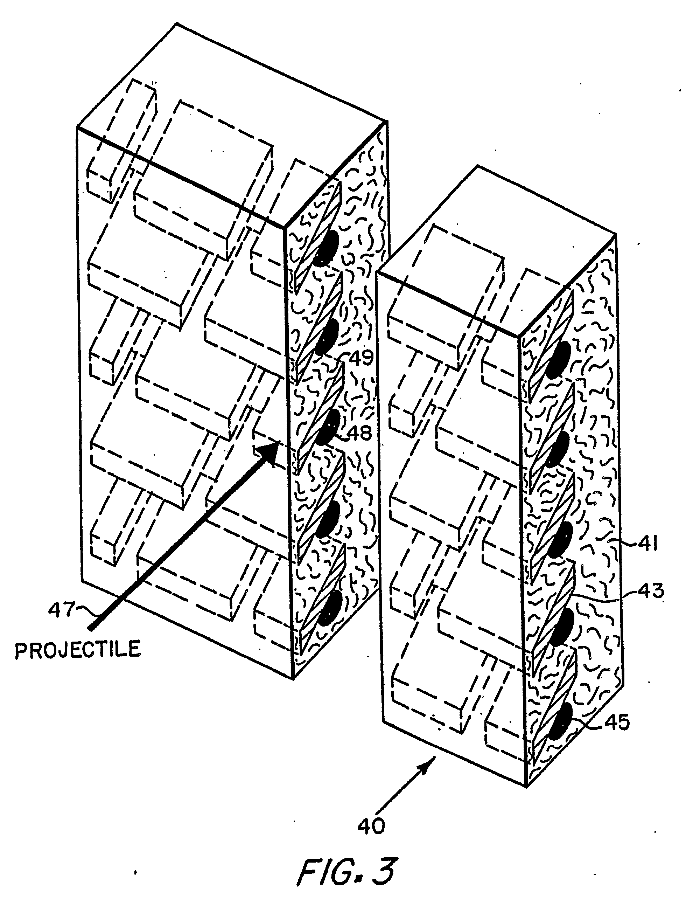

Figure 3 depicts a cross-sectional view of an armor 40.

In this embodiment steel or ceramic tiles 43 are completely embedded in a chemically bonded ceramic material 41 so that the chemically bonded ceramic serves as a potting medium. To maximize the deflective effect, the steel or ceramic tiles can be set at oblique angles to the expected path of the projectile 47. Each steel or ceramic tile 43 is backed by an explosive charge 45. When the armor 40 is struck by a projectile 47 of sufficient energy, the explosive charge 48 is detonated and the forward displacement of the steel or ceramic tile 49 has the effect of deflecting and destabilizing the projectile. The chemically bonded ceramic material provides a rigid support structure for the steel or ceramic tiles of sufficient strength and toughness to localize the reactive movement of the steel or ceramic tiles.

## Examples

In the following examples and throughout the specification and claims, parts are by weight and temperatures are in degrees Celsius, unless indicated otherwise.

In the examples below, the armor test plates are assumed to be 25 cm. square and 5-7 cm. in thickness. Clearly, however, the dimensions of the armor plates, and the quantities and type of explosive used can be scaled depending on the type and size of the projectile threat.

## EXAMPLE 1

The armor shown in Figure 1 is fabricated using a chemically bonded ceramic matrix containing steel fiber and steel powder reinforcement. The composition of the mix is given below:

|  | Weight Percent |
|---|---|
| 434 Stainless Steel Fiber (0.10 inch X 0.004 inch) | 6.3 |
| 316L Stainless Steel (10/25) | 28.0 |
| 316L Stainless Steel (80/100) | 19.3 |
| Portland Cement (Class H) | 24.2 |
| Silica (Min-U-Sil) | 11.8 |
| Silica Fume | 3.3 |
| Mighty-100 Superplasticizer | 0.5 |
| Water | 6.6 |

These ingredients are blended in a planetary mixer for 15 minutes under vacuum, to produce a homogenous slurry relatively free of air voids. Pellets of TATB high explosive are added to the mix, and mixing continued for an additional 5 minutes under vacuum. The pellets are roughly spherical in shape and have an average diameter of 5 - 7 mm. The pellets had been pre-coated with a thin layer of a water-proof polymer such as polyurethane. The pellets are added in a volume proportion of 15 percent of the volume of the chemically bonded ceramic. The slurry is then cast into a previously prepared steel mold under vibration. The consistency of the mix is sufficiently viscous that the explosive particles do not preferentially segregate, but are randomly dispersed in the chemically bonded ceramic matrix. The test plates are allowed to harden under ambient conditions for one day, are steam autoclave cured at 70 psi and 160° C, and are finally oven dried at 80° C.

The test plates containing high strength chemically bonded ceramic are then tested for ballistic performance, and are found effective against high energy projectiles such as shaped charge jets.

## EXAMPLE 2

In this example, an armor shown in Example 1 is produced utilizing an extrudable chemically bonded ceramic in combination with explosive pellets of DATB. The composition of the chemically bonded ceramic is given below:

|  | Weight Percent |
|---|---|
| High Alumina Cement | 42.7 |
| Calcined Alumina (-325) | 14.3 |
| Polyvinyl Acetate (80 percent hydrolyzed) | 4.8 |
| 304 Stainless Steel Fiber (0.31"X 0.004") | 24.2 |
| Glycerol | 0.4 |
| Water | 13.6 |

The above ingredients are thoroughly blended in a kneader-extruder for 15 minutes under vacuum. Pellets of DATB in a volume percentage of 10 percent of the chemically bonded ceramic are added to the mix, and mixing is continued for 5 minutes. When thoroughly blended, the material is extruded through a rectangular slot die, 25 cm. wide, and 7 cm. high, to produce a slab section. While the chemically bonded ceramic is still in the green state, the slab is cut into 25 cm. square plates, and wrapped in plastic sheet. The plates are allowed to develop strength over a period of 24 hours, and then subjected to a slow oven drying to 80° C.

The test plates containing high strength chemically bonded ceramic are then tested for ballistic performance, and are found to be effective against high energy projectiles such as shaped charge jets.

## EXAMPLE 3

An example such as that shown in Figure 2 is fabricated using boron carbide ceramic tiles with charges of RDX explosive situated behind each tile, and backed with chemically bonded ceramic material. The boron carbide tiles have a hexagonal shape, approximately 5 cm. in diameter and 1 cm thick. On to the back of each tile is bonded a 15 gram charge of RDX explosive. The tiles are laid face-down in steel cavity molds in a close packed arrangement. The attached explosive charges are face-up. The chemically bonded ceramic material of the composition shown below is mixed under vacuum in a planetary mixer for 15 minutes and cast over the ceramic tiles using vibration:

|  | Weight Percent |
| --- | --- |
| Calcined Bauxite (4/8) | 44.2 |
| Tabular Alumina (28/48) | 18.9 |
| Portland Cement (Class H) | 18.3 |
| Silica (Min-U-Sil) | 10.1 |
| Silica Fume | 2.8 |
| Mighty-100 Superplasticizer | 0.5 |
| Water | 5.2 |

The resulting plates are steam cured at 60° C, 100 percent relative humidity for 24 hours, and allowed to cure under ambient conditions for 3 days.

The resulting plates containing high strength chemically bonded ceramic are then tested for ballistic performance, and are found effective against high energy projectiles such as shaped charge jets.

## EXAMPLE 4

Example 5 is similar to Example 3 but it utilizes titanium alloy tiles, HMX explosive, and an extrudable chemically bonded ceramic. The titanium tiles are of the Ti-6A1-4V ELI grade alloy, and are of the size 5 cm. in diameter and 1 cm. thick. To each titanium tile is attached a 20 gram charge of the HMX high explosive. The chemically bonded ceramic composition for this example is shown below:

|  | Weight Percent |
| --- | --- |
| Tabular Alumina (28/48) | 40.1 |
| High Alumina Cement | 30.6 |
| Calcined Alumina (-325) | 10.3 |
| Polyvinyl Acetate (80 percent hydrolyzed) | 3.5 |
| 1/8" Glass Fiber | 5.2 |
| Water | 10.3 |

The chemically bonded ceramic material is mixed for 15 minutes under vacuum using an AMK kneader-extruder, and extruded to from a cylinder of material. Cylindrical sections of the extrudate are cut and placed into the cavity of the steel mold. The material is pressed under a hydraulic ram to a pressure of 500 psi, and a temperature of 70° C. The pressed armor plates are wrapped in plastic film, and allowed to moist cure for 24 hours. The plates are then slowly oven dried to 80° C.

The resulting armor plates containing high strength chemically bonded ceramic are tested for ballistic

11

performance, and are found effective against high energy projectiles such as shaped charge jets.

## EXAMPLE 5

An armor such as that shown in Figure 3 comprises conventional ceramic tiles backed by high explosive charges and embedded in a chemically bonded ceramic matrix. The ceramic tiles are made of a high purity sintered alumina, and are 5 cm. X 5 cm. X 0.8 cm. in size. To one side of each ceramic tile, a 10 gram charge of TNT is bonded using an epoxy resin. The ceramic tiles, supported by thin metal wires, are mounted in a steel cavity at an angle of 45 degrees relative to the front face of the armor.

The chemically bonded ceramic matrix of composition shown below is prepared by vacuum mixing in a planetary mixer for a period of 15 minutes:

|  | Weight Percent |
|---|---|
| Tabular Alumina (28/48) | 52.1 |
| Portland Cement (Class H) | 24.0 |
| Silica (Min-U-Sil) | 13.2 |
| Silica Fume | 3.7 |
| Mighty-100 Superplasticizer | 0.7 |
| Water | 6.3 |

The resulting chemically bonded ceramic slurry is cast into the mold under vibration, and the slurry infiltrated around the ceramic tiles. The armor plates are demolded after 24 hours curing under a moist environment, and tested after 7 days at ambient conditions.

The plates containing high strength chemically bonded ceramic are tested for ballistic performance, and are found effective against high energy projectiles such as shaped charge jets.

## EXAMPLE 6

An arrangement similar to that described in Example 5 is made using RHA steel tiles backed with NQ explosive, and supported in a chemically bonded ceramic matrix formed by extrusion. Ten grams of NQ explosive is bonded to each of the steel tiles, and is coated with an acrylate polymer, 2,2-dinitropropyl acrylate polymer, to insure protection against water. The chemically bonded ceramic matrix has the following composition:

|  | Weight Percent |
|---|---|
| High Alumina Cement | 34.0 |
| Magnesium Oxide | 17.0 |
| Sodium Hexametaphosphate | 17.0 |
| 304 Stainless Steel Fiber (0.31" X 0.004") | 22.0 |
| Water | 10.0 |

The steel tiles, back with explosive, are held in place in slots in the cavity of the steel mold. The chemically bonded ceramic material is mixed for 15 minutes under vacuum using an AMK kneader-extruder, and extruded to form a cylinder of material. Cylindrical sections of the extrudate are cut and placed into the cavity of the steel mold. The material is pressed under a hydraulic ram to a pressure of 500 psi, and allowed to form around the metal tiles. The pressed armor plates are wrapped in plastic film, and allowed to moist cure for 24 hours. The plates are then slowly oven dried to 80° C.

The resulting armor plates containing high strength chemically bonded ceramic are tested for ballistic performance, and are found effective against high energy projectiles such as shaped charge jets.

In the foregoing examples, plates or tiles of certain hard materials have been employed. Still other hard materials can be employed such as those described in useful materials for aggregates for use in this invention.

## Claims

- 1 - An armor material comprising a chemically bonded ceramic material and an explosive material embedded in or associated with said ceramic material.

- 2 - The armor material of Claim 1 wherein said chemically bonded ceramic material is a high strength chemically bonded ceramic.

- 3 - The armor material of Claim 2 wherein said armor material comprises an additional constituent comprising

(a) fibers, and/or

(b) hard aggregates.

- 4 - An armor material comprising a high strength chemically bonded ceramic material and explosive particles embedded in said ceramic material.

- 5 - The armor material of Claim 4 wherein said armor material comprises an additional constituent comprising:

(a) fibers that increase the fracture toughness and multi-hit capability of the armor materials, and/or

(b) hard aggregates which blunt, deflect and/or erode projectiles that strike the armor.

- 6 - The armor material of Claim 5 wherein the fibers are metal.

- 7 - The armor material of Claim 5 wherein the fibers are stainless steel.

- 8 - The armor material of Claim 5 wherein the fibers are mineral fibers.

- 9 - The armor material of Claim 5 wherein the fibers are glass fibers.

- 10 - The armor material of Claim 5 wherein the fibers are polymeric fibers.

- 11 - The armor material of Claim 5 wherein the fibers are carbon fibers.

- 12 - The armor material of Claim 5 wherein the aggregate is metal.

- 13 - The armor material of Claim 5 wherein the aggregate is stainless steel.

- 14 - The armor material of Claim 5 wherein the aggregate is at least one of glass, alumina, boron carbide, silicon carbide, zirconium and beryllium oxide.

- 15 - The armor material of Claim 5 wherein the explosive particles comprise diaminotrinitrobenzene or triaminotrinitrobenzene.

- 16 - The armor material of Claim 5 wherein the explosive particles comprise nitroguanadine or trinitrotoluene.

- 17 - The armor material of Claim 5 wherein the explosive particles comprise cyclotetramethylenetetranitramine or cyclotrimethylenetrinitramine.

18 - A multi-component armor comrising segments of various sizes, shapes and materials embedded in or associated with an armor material comprising a chemically bonded ceramic and an explosive material.

- 19 - The multi-component armor of Claim 18 wherein said composition comprises an additional constituent comprising

(a) high strength, high modulus fibers, and/or

(b) hard aggregates.

- 20 - A multi-component armor comprising a laminated structure wherein at least one of the layers of the laminate is an armor material comprising a high strength chemically bonded ceramic and an explosive material.

- 21 - The multi-component armor of Claim 20 wherein the laminated structure comprises metal or conventional ceramic plates forming a front facing and having an explosive material positioned on the side of the plate opposite from the side impacted by a projectile, and supported by a substrate comprising a high strength chemically bonded ceramic.

- 22 - The multi-component armor of Claim 21 wherein said high strength chemically bonded ceramic comprises an additional constituent comprising

(a) high strength, high modulus fibers, and/or

(b) hard aggregates.

- 23 - A multi-component armor comprising plates or tiles of a hard material embedded in an armor material comprising a high strength chemically bonded ceramic.

- 24 - The multi-component armor of Claim 23 wherein the hard material is steel or conventional ceramic.

- 25 - The multi-component armor of Claim 24 wherein the steel or ceramic plates or tiles are positioned at an angle to the face of the armor impacted by a projectile.

- 26 - The multi-component armor of Claim 19 wherein the fibers are metal.

- 27 - The multi-component armor of Claim 19 wherein the fibers are stainless steel.

- 28 - The multi-component armor of Claim 19 wherein the fibers are ceramic fibers, glass fibers, polymeric fibers or carbon fibers.

- 29 - The multi-component armor of Claim 19 wherein the aggregate is metal.

- 30 - The multi-component armor of Claim 19 wherein the aggregate is stainless steel.

- 31 - The multi-component armor of Claim 19 wherein the aggregate is at least one of glass, alumina, boron carbide, silicon carbide and beryllium oxide.

14

FIG. 1

33

38
39

37

PROJECTILE

35

31

30

FIG. 2

47~

PROJECTILE

49

48

41

43

45

40

*FIG. 3*

European Patent Office

EUROPEAN SEARCH REPORT

. Application number

## DOCUMENTS CONSIDERED TO BE RELEVANT

EP 88110031.7

| Category | Citation of document with indication, where appropriate, of relevant passages | Relevant to claim | CLASSIFICATION OF THE APPLICATION (Int. Cl.4) |
|---|---|---|---|
| P,X | GB - A - 2 191 276 (ROYAL ORDNANCE PLC) <br> * Totality * <br> -- | 1-3, 18,19, 26-31 | F 41 H 5/02 <br> C 04 B 35/71 |
| Y | DE - A1 - 3 507 216 (RHEINMETALL GMBH) <br> * Totality * <br> -- | 1,4, 18,20, 23 | |
| X | DE - B2 - 2 031 658 (KRAUSS-MAFFEI AG) <br> * Totality * <br> -- | 18,20, 21 | |
| X | US - A - 3 828 699 (BOWEN) <br> * Totality * <br> -- | 2,3,5-14,19, 23-31 | |
| X | AT - B - 378 365 (KREUTZER) <br> * Totality * <br> -- | 23-25 | TECHNICAL FIELDS SEARCHED (Int. Cl.4) <br><br> C 04 B <br> B 32 B <br> F 41 H |
| X | AT - B - 24 757 (DANSETTE) <br> * Totality * <br> -- | 23,24 | |
| D,X | US - A - 4 482 385 (SATKOWSKI et al.) <br> * Claims 4-7 * <br> ---- | 23,24 | |

The present search report has been drawn up for all claims

| Place of search | Date of completion of the search | Examiner |
|---|---|---|
| VIENNA | 12-10-1988 | BECK |